# EUROPÄISCHE PATENTANMELDUNG

(11) **EP 3 965 240 A1**
(43) Veröffentlichungstag der Anmeldung: **09.03.2022**
(21) Anmeldenummer: 21194558.9
(22) Anmeldetag: 02.09.2021
(51) Int. Cl.: H02B 1/32, H02B 1/052

(54) **VORRICHTUNG ZUR BEFESTIGUNG UND VERDRAHTUNG VON ELEKTRISCHEN EINHEITEN IN EINEM SCHALTSCHRANK**

(30) Priorität: 03.09.2020 DE 102020123020
(71) Anmelder: HOMAG GmbH, 72296 Schopfloch (DE)
(72) Erfinder: Ufer, Hans-Peter, 72280 Dornstetten (DE)
(74) Vertreter: Hoffmann Eitle

(57) **Zusammenfassung**

Eine Vorrichtung zur Aufnahme und Verdrahtung von elektrischen Einheiten einer Bearbeitungsvorrichtung zum Bearbeiten von Werkstücken, die bevorzugt zumindest abschnittsweise aus Holz, Holzwerkstoffen, Kunststoff oder dergleichen bestehen, in einem Schaltschrank, mit einem Montagegestell, welches eine leiterförmige Grundstruktur mit Längs- und Querstreben aufweist, zeichnet sich dadurch aus, dass das Montagegestell einstückig und bevorzugt dünnwandig geformt ist.

Verfahren zur Herstellung einer Vorrichtung zur Aufnahme und Verdrahtung von elektrischen Einheiten beinhaltet das Bereitstellen einer einstückigen bevorzugt dünnwandigen Grundplatte, das Herauslösen von Ausnehmungen durch beispielsweise Ausstanzen, Ausfräsen, Ausschneiden und/oder Aussägen, das vertikale und horizontale einstückige Abkanten und/oder Abbiegen des zweiten leistenförmigen Teils vom ersten Teil der Längs- und/oder Querstreben, das vertikale und horizontale einstückige Abkanten und/oder Abbiegen des dritten leistenförmigen Teils vom zweiten leistenförmigen Teil der Längs- und/oder Querstreben.

Eine Bearbeitungsvorrichtung zum Bearbeiten von Werkstücken, die bevorzugt zumindest abschnittsweise aus Holz, Holzwerkstoffen, Kunststoff oder dergleichen bestehen, mit einem Schaltschrank, in welchem eine Vorrichtung zur Aufnahme und Verdrahtung von elektrischen Einheiten montiert ist.

## Beschreibung

### Technisches Gebiet

Die Erfindung betrifft eine Vorrichtung zur Aufnahme und Verdrahtung von elektrischen Einheiten in einem Schaltschrank, ein Verfahren zur Herstellung der Vorrichtung und eine Bearbeitungsvorrichtung mit der Vorrichtung in einem Schaltschrank.

### Stand der Technik

Aus dem Stand der Technik sind unterschiedliche Vorrichtungen zur Aufnahme und Verdrahtung von elektrischen Einheiten bekannt. Derartige Vorrichtungen bestehen in der Regel aus Hutschienen oder einer Montageplatte, welche an zwei senkrechte Leisten eines Unterbaues angeschraubt sind. Die elektrischen Einheiten werden durch die Abstützungen in Abstand von der Rückwand eines Verteilerkastens oder dergleichen gehalten. In den dadurch gebildeten Zwischenraum werden die Leitungen von oben und/oder unten her an die elektrischen Einheiten gelegt.

Beispielsweise beschreibt die EP 0 902 513 A2 eine Vorrichtung zur Befestigung und Verdrahtung einer Vielzahl von elektrischen Einheiten, insbesondere in einem Schaltschrank, mit wenigstens einem die elektrischen Einheiten an seiner Montageseite aufnehmenden Montagesteg, der an wenigstens zwei senkrecht dazu dahinter angeordneten Tragschienen befestigbar ist, wobei Befestigungsmittel zum Befestigen der elektrischen Einheiten am Montagesteg vorgesehen sind.

Darüber hinaus ist aus der DE 10 2004 032 864 A1 ein Verteiler der Elektroinstallation mit mindestens einer zur Halterung mindestens eines Gerätes, insbesondere Schutzschalters, dienenden Hutschiene oder Montageplatte, für die an einem Unterbau im Abstand voneinander zwei Abstützungen angeordnet sind, an der sie befestigt sind, bekannt. Durch Entriegeln von Rasten kann hier eine vollständig mit Geräten besetzte Hutschiene von den Abstützungen abgenommen werden, um die hinter ihr zu verlegenden Leitungen zu legen.

Bei diesen Vorrichtungen wird eine Vielzahl von einzelnen Bauteilen aus unterschiedlichen Werkstoffen benötigt, die vergleichsweise aufwendig hergestellt, zusammengesteckt und montiert werden müssen. Darüber hinaus besteht hinsichtlich einer effizienten und übersichtlichen Verdrahtung der elektrischen Einheiten noch Optimierungspotential, wobei die Anforderungen der aktuellen EMV-Norm und VDE/UL Vorschriften einzuhalten sind.

### Darstellung der Erfindung

Der Erfindung liegt die Aufgabe zugrunde, eine einfach herzustellende und günstige Vorrichtung zur Aufnahme von elektrischen Einheiten bereit zu stellen, welche eine individuelle und effiziente Bestückung der elektrischen Einheiten und deren Verdrahtung ermöglicht.

Erfindungsgemäß wird diese Aufgabe durch eine Vorrichtung mit den Merkmalen des Patentanspruchs 1 gelöst. In den Unteransprüchen finden sich vorteilhafte Ausgestaltungen und Verbesserungen der Erfindung.

Der Erfindung liegt dabei insbesondere die Erkenntnis zugrunde, dass durch eine Reduzierung der Anzahl an Einzelkomponenten einer Vorrichtung zur Aufnahme von elektrischen Einheiten der Fertigungsaufwand und damit die Kosten verringert werden. Bei der Herstellung eines einstückig geformten Montagegestells aus einer dünnwandigen Grundplatte muss nur noch eine Einzelkomponente gefertigt werden. Es ist dabei jedoch möglich, beispielsweise durch Herauslösen und Abkanten und/oder Umbiegen von definierten Bereichen der dünnwandigen Grundplatte das einstückig geformte Montagegestell variabel herzustellen, sodass eine individuelle Anordnung der elektrischen Einheiten und deren effiziente Verkabelung berücksichtigt werden kann.

Unter Nutzung dieser Erkenntnisse stellt die Erfindung eine Vorrichtung zur Aufnahme und Verdrahtung von elektrischen Einheiten einer Bearbeitungsvorrichtung zum Bearbeiten von Werkstücken bereit, die bevorzugt zumindest abschnittsweise aus Holz, Holzwerkstoffen, Kunststoff oder dergleichen bestehen, in einem Schaltschrank, mit einem Montagegestell, welches eine leiterförmige Grundstruktur mit Längs- und Querstreben aufweist, dadurch gekennzeichnet, dass das Montagegestell einstückig und bevorzugt dünnwandig geformt ist.

Die Erfindung sorgt somit dafür, dass der Montagerahmen nur aus einem Stück besteht und damit eine hohe Stabilität aufweist. Durch die einstückige Herstellung des Rahmens aus einer dünnwandigen Grundplatte werden das Gesamtgewicht und der notwendige Rohstoffaufwand gering gehalten.

Ein weiterer Vorteil besteht darin, dass die Montage und die Verdrahtung aller elektrischen Einheiten an das Montagegestell außerhalb des Schaltschranks durchgeführt werden können und das vormontierte Montagegestell erst anschließend an die vorgesehene Position im Schaltschrank angebracht wird. Jene Position kann darüber hinaus bei Bedarf variiert werden, ohne dass die elektrischen Einheiten und deren Verdrahtung vorher wieder entfernt werden müssen.

Des Weiteren ist es von Vorteil, dass das Montagegestell in einem Stück im Schaltschrank montiert wird und somit den Montageaufwand gegenüber einem Montagegestell aus einzelnen Komponenten erleichtert.

Durch die variable Fertigung des Montagegestells kann eine individuelle Platzierung der elektrischen Einheiten bereits bei der Herstellung berücksichtigt werden, um die Verdrahtungslänge zwischen den Einheiten auf ein Minimum zu reduzieren. Auf diese Weise kann der zeitliche und materielle Verdrahtungsaufwand gering gehalten werden.

Darüber hinaus ist auf Grund der guten Zugänglichkeit des einstückig geformten Montagegestells ein hoher Automationsanteil bei der Montage und Verdrahtung der elektrischen Einheiten möglich.

Durch die leiterförmige Struktur und den entsprechend freiliegenden Bereichen zwischen den Querstreben ist eine übersichtliche Verdrahtung zwischen den elektrischen Einheiten sowohl entlang der Querstreben aber auch zwischen den Querstreben in unterschiedlichen Ebenen möglich.

Darüber hinaus können auf diese Weise elektrische Einheiten und deren Verdrahtung entsprechend ihrer Leistungsklassen in unterschiedlichen Etagen gruppiert und voneinander separiert angebracht werden, sodass gegenseitige Störeinflüsse vermieden werden und die Übersichtlichkeit verbessert wird.

Ein weiterer Vorteil liegt darin, dass mehrere gleiche und/oder sich unterscheidende Montagegestelle in einem Schaltschrank kombiniert angeordnet und/oder erweitert werden können.

Bevorzugt ist die Vorrichtung derart eingerichtet, dass das Montagegestell innerhalb des Schaltschranks so montierbar ist, dass an einer Vorderseite und/oder einer Rückseite des Montagegestells elektrische Einheiten und/oder Verdrahtung montierbar sind. Auf diese Weise kann sowohl der Platz an der Vorder- und/oder Rückseite des Montagegestells optimal ausgenutzt werden und ein freistehender Schaltschrank von diesen Seiten aus gleichzeitig mit elektrischen Einheiten bestückt und verdrahtet werden.

Gleichzeitig ist es vorteilhaft, dass die elektrischen Einheiten und deren Verdrahtung an der Vorder- und Rückseite des Montagegestells auf Grund der leiterförmigen Struktur und der Positionierung im Schaltschrank optimal von Luft umströmt werden, sodass eine effiziente Kühlung gewährleistet wird.

In einer weiter bevorzugten Ausgestaltung der Erfindung ist die Vorrichtung derart ausgestaltet, dass sich an einen ersten Teil der Längs- und/oder Querstreben mindestens ein horizontal und/oder vertikal einstückig abgekanteter und/oder gebogener zweiter leistenförmiger Teil anschließt. Auf diese Weise kann das vorhandene Material der dünnwandigen Grundplatte dazu genutzt werden, variabel einen zusätzlichen Teilbereich des Montagegestells auszuformen.

Dies hat den Vorteil, dass bei Anbringung von elektrischen Einheiten und Verdrahtung am zweiten abgekanteten Teil der Querstreben ein bestimmter Abstand und/oder eine entsprechende Ausrichtung jener Komponenten zum Montagegestell berücksichtigt werden können.

Weiterhin ist es von Vorteil, dass mindestens zwei Ebenen am Montagegestell zur Montage von elektrischen Einheiten und Verdrahtung zur Verfügung stehen.

In einer noch weiter bevorzugten Ausgestaltung der Erfindung ist die Vorrichtung derart gestaltet, dass sich an den zweiten leistenförmigen Teil der Längs- und/oder Querstreben mindestens ein horizontal und/oder vertikal einstückig abgekanteter und/oder gebogener dritter leistenförmiger Teil anschließt. Auf diese Weise kann das vorhandene Material der dünnwandigen Grundplatte dazu genutzt werden, einen weiteren Teilbereich des Montagegestells variabel auszuformen.

Dies hat den Vorteil, dass bei Anbringung von elektrischen Einheiten und Verdrahtung am dritten abgekanteten Teil der Querstreben ein bestimmter Abstand und/oder eine entsprechende Ausrichtung jener Komponenten zum Montagegestell berücksichtigt werden kann.

Weiterhin ist es von Vorteil, dass drei Ebenen am Montagegestell zur Montage von elektrischen Einheiten und Verdrahtung zur Verfügung stehen.

In einer noch weiter bevorzugten Ausgestaltung der Erfindung ist die Vorrichtung derart ausgestaltet, dass der zweite leistenförmige Teil in einem Winkel von mindestens 45°, bevorzugt rechtwinklig, gegenüber dem ersten Teil der Längs- und Querstreben abgekantet und/oder gebogen und/oder der dritte leistenförmige Teil in einem Winkel von mindestens 45°, bevorzugt rechtwinklig, gegenüber dem zweiten leistenförmigen Teil Längs- und/oder Querstreben abgekantet und/oder gebogen ist. Dies ermöglicht es, die elektrischen Einheiten und die Verdrahtung übersichtlich entlang einer Querstrebe in jeweils zwei sich unterscheidenden Ebenen anzuordnen und zugänglich zu machen.

Bevorzugt wird weiterhin für die Vorrichtung, dass die Längsstreben des Montagegestells formschlüssig an die Seitenwände innerhalb des Schaltschranks montierbar sind. Auf diese Weise wird eine stabile Anbringung des Montagegestells im Schaltschrank sicher gestellt und der dazu notwendige Montageaufwand auf die Fixierung des Längsstreben beschränkt.

In einer noch weiter bevorzugten Ausgestaltung der Erfindung ist die Vorrichtung derart gestaltet, dass ein abgekanteter und/oder gebogener Teil der Längsstreben des Montagegestell formschlüssig an die Seitenwände innerhalb des Schaltschranks montierbar ist. Dies ermöglicht eine leichtere Anbringung des Montagegestells an die Seitenwände des Schaltschranks, da die abgekanteten Bereiche der Längsstreben besser zugänglich für das Anbringen von Fixierungsmitteln sind.

Es ist weiterhin vorteilhaft, dass der abgekantete und/oder gebogener Teil der Längsstreben des Montagegestell, der formschlüssig mit den Seitenwänden des Schaltschranks anliegt, das Einbringen des Montagegestells in horizontale Richtung stabilisiert.

Bevorzugt wird weiterhin, dass die Vorrichtung derart ausgestaltet ist, dass die abgekanteten und/oder gebogenen leistenförmigen Teile der Längs- und/oder Querstreben an einer Vorderseite und/oder einer Rückseite des Montagegestells hervorstehen. Dies ermöglicht es, dass die montierten elektrischen Einheiten und deren Verdrahtung von allen Richtungen mit Luft in Kontakt sind und jene um diese strömen kann. Dadurch wird eine optimale Kühlung der einzelnen Komponenten gewährleistet.

Bevorzugt ist die Vorrichtung derart eingerichtet, dass entlang mindestens einem ersten Teil der Querstreben, bevorzugt an der Vorderseite des Montagegestells hervorstehend, mindestens ein oder mehrere Befestigungselemente für elektrische Einheiten montierbar sind. Dadurch wird eine schnelle und standardisierte Montage der elektrischen Einheiten ermöglicht. Dies hat den Vorteil, dass auf individuelle Fixierung der elektrischen Einheiten verzichtet werden kann.

Darüber hinaus besteht der Vorteil, dass nur der Bereich mit Befestigungselementen ausgestattet werden kann, in welchem elektrische Einheiten auf diese Weise fixiert werden sollen. Dies reduziert den Einsatz der Befestigungselemente auf ein Minimum und spart Kosten.

Weiterhin bevorzugt ist die Vorrichtung derart ausgestaltet, dass entlang mindestens einem abgekanteten und/oder gebogenen leistenförmigen Teil der Querstreben, bevorzugt an der Rückseite des Montagegestells hervorstehend, mindestens eine Vorrichtung zur Führung einer elektrischen Verdrahtung, insbesondere ein Kabelkanal, angebracht ist. Dadurch wird eine horizontale und gebündelte Verlegung der Verdrahtung sichergestellt. Dies hat den Vorteil, dass ein geordneter und strukturierter Verlauf der Verdrahtung vorliegt.

Darüber hinaus besteht der Vorteil, dass nur der Bereich mit einer Führung einer elektrischen Verdrahtung ausgestattet ist, in welchem die elektrische Verdrahtung parallel entlang einer Querstrebe geführt werden soll. Dies reduziert den Einsatz der Führungen auf ein Minimum und spart Kosten. Weiterhin ist es von Vorteil, dass dadurch Verdrahtung mit unterschiedlichen Spannungen getrennt geführt werden kann und geltende EMV-Normen und VDE/UL Vorschriften eingehalten werden.

In einer noch weiter bevorzugten Ausgestaltung der Vorrichtung ist entlang mindestens eines ersten Teils der Querstreben, bevorzugt an der Vorderseite des Montagegestells hervorstehend, mindestens eine Montageplatte zur Befestigung von elektrischen Einheiten angebracht ist. Die Anbringung der zusätzlichen Montageplatte ermöglicht eine zusätzliche individuelle Montageoption von weiteren elektrischen Einheiten und Verdrahtung, die am Montagegestell selbst nicht vorgesehen werden kann.

Darüber hinaus besteht der Vorteil, besonders schwere elektrische und/oder pneumatische Einheiten nachträglich an das im Schaltschrank fixierte Montagegestell anzubringen, um das Gewicht des Monategestells bei der Einbringung in den Schaltkasten zu verringern und die Arbeit zu erleichtern.

Bevorzugt wird weiterhin für die Vorrichtung, dass Ausnehmungen für Befestigungsmittel in den Längs- und/oder Querstreben vorgesehen sind. Auf diese Weise können entsprechende Befestigungsmittel bei der Montage leichter angebracht werden.

Bevorzugt ist die Vorrichtung derart eingerichtet, dass ein erster Teil einer Längsstrebe, zwischen zwei Querstreben in horizontaler Richtung verbreitert ist und die zwei Querstreben in vertikaler Richtung im verbreiterten Bereich einstückig verbindet. Auf diese Weise wird ein zusätzlicher Bereich zwischen den Querstreben des Montagegestells zur Anbringung von elektrischen Einheiten und Verdrahtung zur Verfügung gestellt.

Es besteht außerdem der Vorteil, dass das Montagegestell an dieser Stelle eine erhöhte Steifigkeit aufweist.

Die vorliegende Erfindung stellt weiterhin ein Verfahren zur Herstellung einer Vorrichtung zur Aufnahme und Verdrahtung von elektrischen Einheiten bereit mit den Schritten: Bereitstellen einer einstückigen, bevorzugt dünnwandigen Grundplatte, Herauslösen von Ausnehmungen durch beispielsweise Ausstanzen, Ausfräsen, Ausschneiden und/oder Aussägen, vertikales und horizontales einstückiges Abkanten und/oder Abbiegen des zweiten leistenförmigen Teils vom ersten Teil der Längs- und/oder Querstreben, vertikales und horizontales einstückiges Abkanten und/oder Abbiegen des dritten leistenförmigen Teils vom zweiten leistenförmigen Teil der Längs- und/oder Querstreben. Dadurch ist es möglich, das Montagegestell aus einem Stück in wenigen Arbeitsschritten zu fertigen. Dies hat den Vorteil, dass keine zusätzlichen Komponenten dem Montagegestell hinzugefügt werden müssen, sondern durch Herauslösen und Abkanten einzelner Teilabschnitte der Grundplatte variabel Teilbereiche des Montagegestells einstückig und individuell formbar sind.

Die Erfindung stellt weiterhin eine Bearbeitungsvorrichtung zum Bearbeiten von Werkstücken bereit, die bevorzugt zumindest abschnittsweise aus Holz, Holzwerkstoffen, Kunststoff oder dergleichen bestehen, mit einem Schaltschrank, in welchem eine Vorrichtung zur Aufnahme und Verdrahtung von elektrischen Einheiten der Bearbeitungsvorrichtung montiert ist. Dadurch ist es möglich, die elektrischen Einheiten der Bearbeitungsvorrichtung an einem Rahmen vormontiert in den Schaltschrank eingebracht werden können. Dies hat den Vorteil, dass die Installation der Bearbeitungsvorrichtung am Aufstellungsort schnell vonstattengeht, da die Anbringung der elektrischen Einheiten und eine Teilverdrahtung im Vorfeld ausgeführt werden.

Des Weiteren ist es von Vorteil, dass eine nachträgliche Nachrüstung und/oder Umrüstung und Verdrahtung von elektrischen Einheiten auf Grund der übersichtlichen Anordnung der bestehenden elektrischen Einheiten und Verdrahtung am Montagegestell leichter durchzuführen ist.

### Kurze Beschreibung der Zeichnungen

Weitere Merkmale und Vorteile der Vorrichtungen und des Verfahrens ergeben sich aus der nachfolgenden Beschreibung von Ausführungsformen unter Bezugnahme auf die beiliegenden Zeichnungen. Von diesen Zeichnungen zeigt:
- Fig. 1: eine dreidimensionale Rückansicht des Montagegestells;
- Fig. 2: eine dreidimensionale Ansicht der zusätzlich montierbaren Montageplatte;
- Fig. 3: eine dreidimensionale Ansicht des Schaltschranks mit einem montierten Montagegestell und der Montageplatte;

### Beschreibung von Ausführungsformen

Es ist für den Fachmann ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein. Ferner sind sämtliche Merkmale, die vorangehend oder nachfolgend mit Bezug auf das Verfahren erwähnt werden, auf das System anwendbar und umgekehrt.

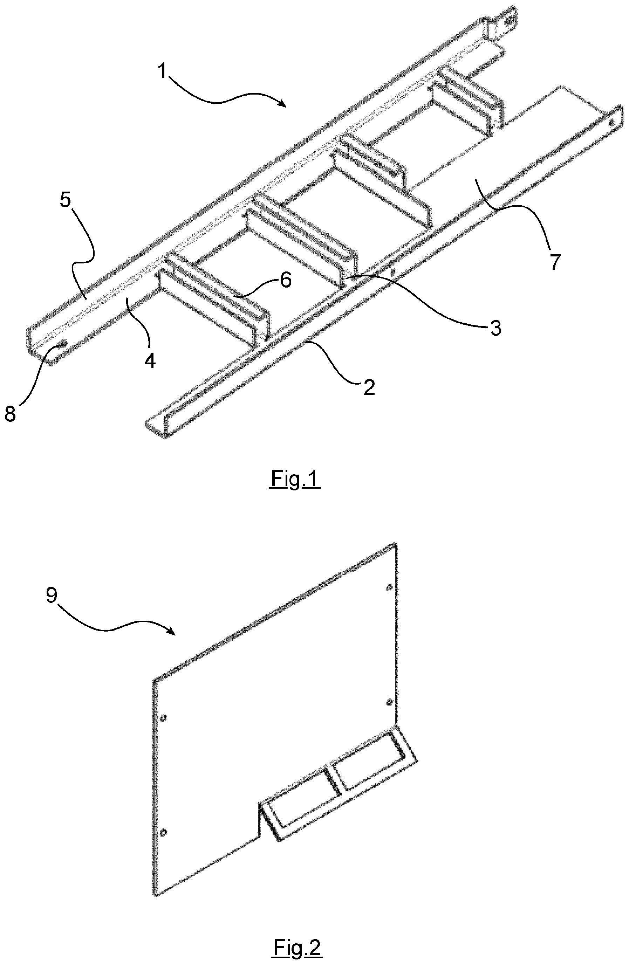

Figur 1 zeigt eine Rückansicht des leiterförmigen Montagegestells 1 einer Ausführungsform der beanspruchten Vorrichtung zur Aufnahme und Verdrahtung von elektrischen Einheiten. Das Montagegestell 1 weist dabei insbesondere zwei zueinander parallel angeordnete Längsstreben 2 und vier parallel zueinander angeordnete Querstreben 3 auf. Es können aber auch beispielsweise eine, zwei, drei, fünf und oder mehr Querstreben 3 vorhanden sein. Die Längs- 2 und Querstreben 3 sind in dieser Ausführungsform außerdem bevorzugt rechtwinklig zueinander angeordnet, wobei aber auch ein Winkel kleiner oder größer als 90° möglich ist. Das Montagegestell 1 kann beispielsweise aus Edelstahl, verzinktem Blech, Aluminium oder dergleichen geformt sein.

Weiterhin zeichnet sich das Montagegestell 1 der Figur 1 durch seine dünnwandige und einstückige Struktur aus. Als "dünnwandig" wird in diesem Zusammenhang insbesondere eine Wandstärke bezeichnet, bei welcher das Montagegestell 1 nach Anbringung der elektrischen Einheiten und deren Verkabelung eine ausreichende Verwindungssteifigkeit aufweist, aber dennoch im Herstellungsprozess zufriedenstellend abkantbar/biegbar ist. Beispielsweise liegt die Wandstärke im Bereich von 1 bis 5 Millimeter, bevorzugt zwischen 2 bis 4 Millimeter.

Unter dem Begriff "einstückig" wird insbesondere verstanden, dass das Montagegestell 1 aus einer zusammenhängenden Grundform, beispielsweise einer rechtwinkligen dünnwandigen Grundplatte, geformt wird. Mit anderen Worten, die einzelnen ausgeformten Teilbereiche des Montagegestells 1 sind bereits am Anfang des Herstellungsprozess mit der Grundplatte dauerhaft verbunden und/oder an diese angeformt und werden nicht nachträglich an die Grundplatte oder an das Montagegestell 1 angeformt und/oder hinzugefügt.

Die einstückige Struktur des Montagegestells 1 und deren Herstellung schließt jedoch nicht aus, dass beispielsweise mehrere einstückige Montagegestelle 1 im Herstellungsverfahren und/oder im späteren Einsatz im Schaltkasten 10 miteinander lösbar und/oder dauerhaft verbunden werden können. Außerdem ist eine zusätzliche Anbringung von weiteren Komponenten zur Erweiterung der Grundstruktur des Montagegestells durch beispielsweise Schweißen, Nieten oder Kleben möglich.

Die zwei Längsstreben 2 des Montagegestells 1 dieser Ausführungsform weisen insbesondere jeweils einen ersten Bereich 4 und einem zweiten Bereich 5 auf, welcher vom ersten Bereich 4 bevorzugt rechtwinklig und vertikal in Richtung der Rückseite des Montagegestells abgekantet ist. Anders ausgedrückt, der zweite Bereich 5 der Längsstreben bildet eine bevorzugt rechtwinklig angeordnete leistenförmige Struktur gegenüber dem ersten Bereich 4 der Längsstrebe 2 aus.

Des Weiteren ist gemäß dieser Ausführungsform ein erster Teil der Querstreben 3 mit einem ersten Teil der beiden Längsstreben 2 einstückig verbunden, wodurch eine leiterförmige Struktur entsteht. Dadurch bildet sich zwischen den Längs- 2 und Querstreben 3 ein Freiraum aus. Dieser Freiraum kann beispielsweise genutzt werden, um elektrischen Einheiten, welche an zwei unterschiedlichen übereinander liegenden Querstreben an der Vorderseite des Montagegestells angebracht sind, über einen möglichst kurzen Abstand zu verdrahten. Nachdem der Freiraum sowohl von der Vorder- als auch Rückseite zugänglich ist, ist die entsprechend direkt verlegte Verdrahtung übersichtlich und nachvollziehbar zu überblicken und manuell zu erreichen.

Die Querstreben 3 des Montagegestells 1 dieser Ausführungsform weisen zwei jeweils zweite und einen dritten leistenförmigen Bereich auf. Die beiden zweiten Bereiche sind dabei vom ersten Bereich bevorzugt rechtwinklig und horizontal in Richtung der Rückseite des Montagegestells rechtwinklig abgekantet. Der zweite Bereich, der sich am oberen Ende der Querstreben 3 bevorzugt rechtwinklig und horizontal in Richtung der Rückseite des Montagegestells leistenförmig ausbildet, weist einen dritten leistenförmigen Bereich auf, der bevorzugt rechtwinklig und horizontal in Richtung des unteren Endes des Montagegestells vom zweiten leistenförmigen Bereich der Querstreben abgekantet ist. Die genannten Teilbereiche des Montagegestells bilden auf diese Weise Flächen aus, die als Montageflächen genutzt werden können, um beispielsweise einen Kabelkanal in horizontaler Richtung an einer Querstrebe anzubringen, in welchem die Verdrahtung der an der Vorderseite des Montagegestells angebrachten elektrischen Einheiten geführt werden kann. Die leistenförmigen Bereiche des Montagegestells 1 können auch in einem Winkel größer oder kleiner 90° zueinander abgekantet sein, wodurch die Orientierung der angebrachten Komponenten im Raum variabel gestaltbar ist.

Darüber hinaus sind gemäß dieser Ausführungsform am Montagegestell Ausnehmungen 8 vorgesehen, die beispielsweise im Bereich des ersten und zweiten leistenförmigen Bereichs der Längsstreben 2 zu finden sind, um an jenen Stellen Fixierungsmittel wie beispielsweise Schrauben und/oder Stifte anzubringen. Auf diese Weise ist es möglich das Montagegestell 1 an den Ausnehmungen 8 leichter an die Seiten des Schaltkastens 10 zu fixieren.

Des Weiteren sind entsprechend dieser Ausführungsform Ausnehmungen an den Querstreben 3 des Montagegestells 1 vorhanden, sodass mit entsprechenden Fixierungsmitteln, zum Beispiel Schrauben und/oder Stifte, Befestigungsmittel für elektrische Einheiten wie beispielsweise Hutschienen 13 oder C-Profil-Schienen, die elektrischen Einheiten selbst und Kabelkanäle leichter angebracht werden können.

Gemäß dieser Ausführungsform ist ein erster Teil einer Längsstrebe 2 des Montagegestells 1, zwischen zwei Querstreben 3 in horizontaler Richtung verbreitert und verbindet die zwei Querstreben 3 in vertikaler Richtung im verbreiterten Bereich 7 einstückig. Mit anderen Worten wird der zwischen den beiden Längs- 2 und Querstreben 3 ausgebildeter Freiraum durch den verbreiterten Bereich 7 verkleinert. Im verbreiterten Bereich 7 können beispielweise elektrische und/oder pneumatische Einheiten angebracht werden, welche entlang einer größeren Fläche fixiert werden müssen. Gleichzeitig zeichnet sich das Montagegestell 1 an dieser Stelle durch eine erhöhte Verwindungssteifigkeit aus.

Die Figur 2 zeigt eine Ausführungsform einer Montageplatte 9 zur Befestigung von elektrischen und/oder pneumatischen Einheiten, welche beispielsweise nicht mittels einer Hutschiene 13 oder dergleichen an die Querstreben fixiert werden können. Die Montageplatte 9 wird insbesondere an mindestens zwei Querstreben 2 befestigt. Zusätzlich kann beispielsweise eine Fixierung entlang einer Längsstrebe 2 erfolgen. Durch die variable und flexible Anordnungsmöglichkeit der Montageplatte 9 an den Längs- 2 und Querstreben 3 der des Montagegestells 1 kann die Anordnung von elektrischen Einheiten und deren Verdrahtung flexibel in einzelnen Bereichen modifiziert werden ohne dass der gesamte Montagerahmen 1 angepasst werden muss.

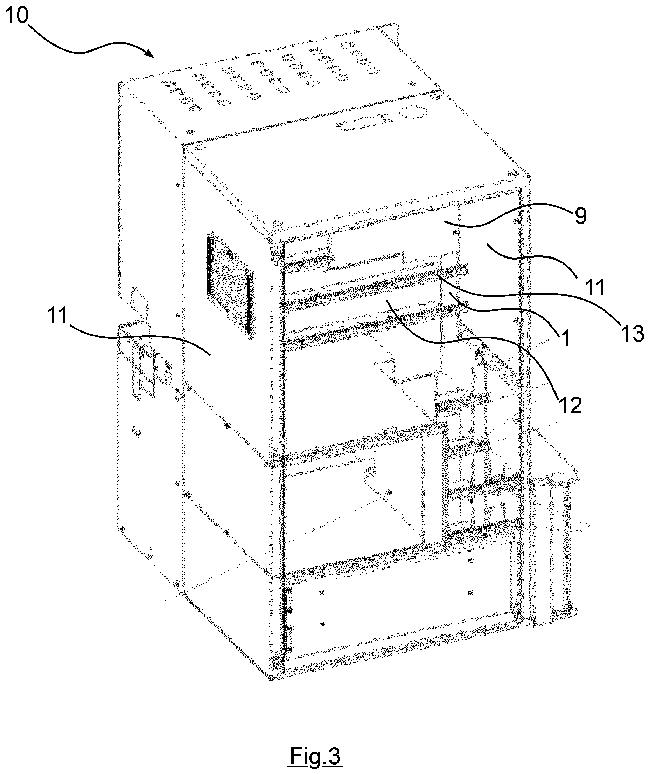

Die Figur 3 zeigt einen Schalkasten 10 in perspektivischer Ansicht mit zwei Seitenwänden 11 und einer Rückwand 12. In den Schaltkasten 10 ist ein Montagegestell 1 eingebracht, sodass die Vorderseite des Montagegestells 1 in Richtung der Öffnung der Schalkastens 10 positioniert ist. Der zweite vertikale abgekantete Bereich 5 der Querstreben 2 liegt gemäß dieser Ausführungsform formschlüssig an die Seitenwände des Schaltkastens 10 an und ist an diese beispielsweise mittels Schrauben fixiert.

Außerdem ist gemäß dieser Ausführungsform das Montagegestell 1 derartig in den Schaltkasten 10 montiert, dass an der Rückseite des Montagegestells 1 in Richtung der Rückwand des Schaltkastens 10 ein Freiraum ausgebildet wird, sodass in diesem Verdrahtung gelegt werden kann. Die Verdrahtung kann dabei entweder zwischen den einzelnen elektrischen Einheiten frei und direkt in diesem Freiraum gelegt werden und/oder entlang von Kabelkanälen (in dieser Ausführungsform nicht gezeigt), die entlang einem abgekanteten Bereich der Querstreben horizontal angebracht sind. Der Freiraum und damit auch die Verdrahtung ist zwischen den Querstreben frei zugänglich und übersichtlich einsehbar.

An der Vorderseite der Querstreben 3 des Montagegestells 1 sind insbesondere in Richtung der Öffnung des Schaltkastens 10 Hutschienen 13 angebracht, an welchen elektrische Einheiten positioniert werden können. Darüber hinaus ist in dieser Ausführungsform eine Montageplatte an die beiden obersten Querstreben 3 montiert.

Der Einsatz eines oder mehrerer Montagegestelle 1 ist nicht nur in einem Schaltschrank möglich, sondern erstreckt sich auch auf andere Vorrichtungen oder räumliche Strukturen zur Organisation von elektrischen Einheiten, die entweder gegenüber der Umgebung vollständig geschlossen/verschließbar oder teilweise offen sind. Dazu zählen beispielsweise auch Schaltkästen, Verteilerkästen, Verteilerschränke, Sicherungskästen, Trafostationen, Schaltstationen oder Serverräume.

### Bezugszeichenliste

- 1: leiterförmiges Montagegestell
- 2: Längsstrebe
- 3: Querstrebe
- 4: erster Teil des Montagegestells
- 5: zweiter abgekanteter Teil des Montagegestells
- 6: dritter abgekanteter Teil des Montagegestells
- 7: verbreiteter Bereich der Längsstrebe des Montagegestells
- 8: Ausnehmung
- 9: Montageplatte
- 10: Schaltschrank
- 11: Seitenwand des Schaltschranks
- 12: Rückwand des Schaltschranks
- 13: Hutschiene

## Patentansprüche

1. Vorrichtung zur Aufnahme und Verdrahtung von elektrischen Einheiten einer Bearbeitungsvorrichtung zum Bearbeiten von Werkstücken, die bevorzugt zumindest abschnittsweise aus Holz, Holzwerkstoffen, Kunststoff oder dergleichen bestehen, in einem Schaltschrank (10), mit einem Montagegestell (1), welches eine leiterförmige Grundstruktur mit Längs- (2) und Querstreben (3) aufweist, **dadurch gekennzeichnet, dass** das Montagegestell (1) einstückig und bevorzugt dünnwandig geformt ist.

2. Vorrichtung nach Anspruch 1, **dadurch gekennzeichnet, dass** das Montagegestell (1) innerhalb des Schaltschranks (10) so montierbar ist, dass an einer Vorderseite und/oder einer Rückseite des Montagegestells (1) elektrische Einheiten und/oder Verdrahtung montierbar sind.

3. Vorrichtung nach Anspruch 1 oder 2, **dadurch gekennzeichnet, dass** sich an einen ersten Teil (4) der Längs-(2) und/oder Querstreben (3) mindestens ein horizontal und/oder vertikal einstückig abgekanteter und/oder gebogener zweiter leistenförmiger Teil (5) anschließt.

4. Vorrichtung nach Anspruch 3, **dadurch gekennzeichnet, dass** sich an den zweiten leistenförmigen Teil (5) der Längs- (2) und/oder Querstreben (3) mindestens ein horizontal und/oder vertikal einstückig abgekanteter und/oder gebogener dritter leistenförmiger Teil (6) anschließt.

5. Vorrichtung nach Anspruch 3 oder 4, **dadurch gekennzeichnet, dass** der zweite leistenförmige Teil (5) in einem Winkel von mindestens 45°, bevorzugt rechtwinklig, gegenüber dem ersten Teil (4) der Längs- (2) und Querstreben (3) abgekantet und/oder gebogen und/oder der dritte (6) leistenförmige Teil in einem Winkel von mindestens 45°, bevorzugt rechtwinklig, gegenüber dem zweiten leistenförmigen Teil Längs- (2) und/oder Querstreben (3) abgekantet und/oder gebogen ist.

6. Vorrichtung nach einem der vorherigen Ansprüche, **dadurch gekennzeichnet, dass** das die Längsstreben (2) des Montagegestell (1) formschlüssig an die Seitenwände (11) innerhalb des Schaltschranks (10) montierbar sind.

7. Vorrichtung nach einem der Ansprüche 3 bis 6, **dadurch gekennzeichnet, dass** ein abgekanteter und/oder gebogener Teil der Längsstreben (2) des Montagegestell (1) formschlüssig an die Seitenwände (11) innerhalb des Schaltschranks (10) montierbar ist.

8. Vorrichtung nach einem der Ansprüche 3 bis 7, **dadurch gekennzeichnet, dass** die abgekanteten und/oder gebogenen leistenförmigen Teile der Längs- (2) und/oder Querstreben (3) an einer Vorderseite und/oder einer Rückseite des Montagegestells (1) hervorstehen.

9. Vorrichtung nach einem der vorherigen Ansprüche, **dadurch gekennzeichnet, dass** entlang mindestens einem ersten Teil (4) der Querstreben (3), bevorzugt an der Vorderseite des Montagegestells (1) hervorstehend, mindestens ein oder mehrere Befestigungsmittel (13) zur Befestigung von elektrischen Einheiten montierbar sind.

10. Vorrichtung nach einem der vorherigen Ansprüche 3 bis 9, **dadurch gekennzeichnet, dass** entlang mindestens einem abgekanteten und/oder gebogenen leistenförmigen Teil der Querstreben (3), bevorzugt an der Rückseite des Montagegestells (1) hervorstehend, mindestens eine Vorrichtung zur Führung einer elektrischen Verdrahtung, insbesondere ein Kabelkanal, angebracht ist.

11. Vorrichtung einem der vorherigen Ansprüche 3 bis 10, **dadurch gekennzeichnet, dass** entlang mindestens einem ersten Teil der Querstreben (3), bevorzugt an der Vorderseite des Montagegestells (1) hervorstehend, mindestens eine Montageplatte (9) zur Befestigung von elektrischen Einheiten angebracht ist.

12. Vorrichtung einem der vorherigen Ansprüche, **dadurch gekennzeichnet, dass** Ausnehmungen (8) für Befestigungsmittel in den Längs- (2) und/oder Querstreben (3) vorgesehen sind.

13. Vorrichtung nach einem der vorherigen Ansprüche, **dadurch gekennzeichnet, dass** ein erster Teil einer Längsstrebe (2), zwischen zwei Querstreben (3) in horizontaler Richtung verbreitert ist und die zwei Querstreben (3) in vertikaler Richtung im verbreiterten Bereich (7) einstückig verbindet.

14. Verfahren zur Herstellung einer Vorrichtung zur Aufnahme und Verdrahtung von elektrischen Einheiten nach einem der vorherigen Ansprüche 1 bis 13 mit den Schritten:
Bereitstellen einer einstückigen, bevorzugt dünnwandigen Grundplatte,
Herauslösen von Ausnehmungen durch beispielsweise Ausstanzen, Ausfräsen, Ausschneiden und/oder Aussägen,
vertikales und horizontales einstückiges Abkanten und/oder Abbiegen des zweiten leistenförmigen Teils (5) vom ersten Teil (4) der Längs (2) - und/oder Querstreben (3),
vertikales und horizontales einstückiges Abkanten und/oder Abbiegen des dritten leistenförmigen Teils (6) vom zweiten leistenförmigen Teil (5) der Längs- (2) und/oder Querstreben (3) .

15. Bearbeitungsvorrichtung zum Bearbeiten von Werkstücken, die bevorzugt zumindest abschnittsweise aus Holz, Holzwerkstoffen, Kunststoff oder dergleichen bestehen, mit einem Schaltschrank (10), in welchem eine Vorrichtung zur Aufnahme und Verdrahtung von elektrischen Einheiten der Bearbeitungsvorrichtung nach einem der vorherigen Ansprüche 1 bis 13 montiert ist.
